# EUROPÄISCHE PATENTSCHRIFT

(11) **EP 1 422 434 B1**
(45) Veröffentlichungstag und Bekanntmachung des Hinweises auf die Patenterteilung: **26.04.2006**
(21) Anmeldenummer: 03025932.9
(22) Anmeldetag: 13.11.2003
(51) Int. Cl.: F16D 59/02

(54) **Aktuatorvorrichtung**
Actuator
Actionneur

(30) Priorität: 20.11.2002 US 302162
(43) Veröffentlichungstag der Anmeldung: 26.05.2004
(73) Patentinhaber: DEERE & COMPANY, Moline, Illinois 61265-8098 (US)
(72) Erfinder: Ore, Thomas George, Cedar Falls IA 50613 (US)
(74) Vertreter: Holst, Sönke

(56) Entgegenhaltungen:
- FR-A- 2 656 906
- GB-A- 2 123 502
- GB-A- 2 172 677
- US-A- 5 010 984
- US-A- 5 099 964

## Beschreibung

Die Erfindung betrifft eine Aktuatorvorrichtung gemäß dem Oberbegriff des Anspruchs 1, wie sie beispielsweise für eine Feststellbremse verwendbar ist.

Federbeaufschlagte, durch Druckentlastung arbeitende Feststell- bzw. Parkbremsenaktuatoren sind aus dem Stand der Technik in einer Vielzahl von Ausführungsbeispielen bekannt. Solche Aktuatorvorrichtungen erfordern jedoch zumeist einen ganz erheblichen Bauraum. Lediglich beispielsweise wird auf die gattungsbildende FR-A-2 656 906 hingewiesen.

Der vorliegenden Erfindung liegt daher die Aufgabe zugrunde, eine Aktuatorvorrichtung anzugeben und weiterzubilden, durch welche die vorgenannten Probleme überwunden werden. Insbesondere soll eine Aktuatorvorrichtung angegeben und weitergebildet werden, welche einen kleineren Bauraum aufweist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß umfasst eine Aktuatorvorrichtung ein Trägerteil, einen Ringkolben, mindestens eine Tellerfeder und eine hohle, mit einer Bremse in Eingriff bringbare Einheit. Das Trägerteil weist einen Flansch auf, welcher radial von dem Trägerteil abragt. Der Ringkolben ist verschiebbar und dichtend an dem Trägerteil angeordnet. Die Tellerfeder ist an dem Trägerteil angeordnet. Der Flansch ist zwischen dem Ringkolben und der Tellerfeder angeordnet. Die Einheit umgibt zumindest bereichsweise den Flansch, den Ringkolben und die Tellerfeder. Ein erstes Ende der Einheit ist mit dem Ringkolben koppelbar. Ein zweites Ende der Einheit ist mit der Tellerfeder koppelbar und ausgebildet, mit einer Radbremse in Eingriff bringbar zu sein. Der Flansch, das Trägerteil, der Ringkolben und die Einheit umschließen eine Kolbenkammer. Die Tellerfeder ist derart vorgespannt und/oder im Querschnitt schräg ausgebildet, dass das zweite Ende der Einheit von dem Flansch wegbewegt wird. Eine unter Druck stehende Flüssigkeit in der Kolbenkammer bewegt das zweite Ende der Einheit zu dem Flansch hin.

In einer Konkreten Ausführungsform weist das Trägerteil eine im Wesentlichen zentriert angeordnete, hohle Nabe auf. Die hohle Nabe ist vorzugsweise ausgebildet, eine Achse aufzunehmen.

Besonders bevorzugt ragen eine Vielzahl von Fingern von einem äußeren Rand der Tellerfeder nach außen ab. Das zweite Ende der Einheit weist eine Vielzahl von in umfangsmäßiger Richtung voneinander beabstandet angeordneten Henkel auf. Mit den Henkeln ist ein Sprengring haltbar bzw. fixierbar, welcher mit den Fingern zur Anlage bringbar ist. Ein Henkel könnte eine Vertiefung bilden. Die Vertiefungen der Henkel könnten den Sprengring aufnehmen.

Die Kolbenkammer könnte dadurch abgedichtet werden, dass eine ringförmige Vertiefung oder eine Nut an einer äußeren Oberfläche des Flansches ausgebildet ist. Eine ringförmige Dichtung ist in der Nut angeordnet. Die ringförmige Dichtung ist mit einer inneren Oberfläche der Einheit zur Anlage bringbar.

Um eine unter Druck stehende Flüssigkeit mit der Kolbenkammer zu kommunizieren, ist bevorzugt ein Flüssigkeitskanal in dem Trägerteil ausgebildet.

Die Kolbenkammer könnte weiterhin auch dadurch abgedichtet werden, dass eine ringförmige Vertiefung oder eine Nut an einer inneren Oberfläche des Ringkolbens ausgebildet ist. Eine ringförmige Dichtung ist in der Nut angeordnet. Die ringförmige Dichtung ist mit einer äußeren Oberfläche des Trägerteils zur Anlage bringbar.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erlautert. In der Zeichnung zeigen
- Fig. 1: eine Schnittansicht eines Ausführungsbeispiels einer erfindungsgemäßen Aktuatorvorrichtung und
- Fig. 2: eine perspektivische Ansicht der Aktuatorvorrichtung aus Fig. 1, bei welcher ein Teil zum besseren Verständnis ausgeschnitten ist.

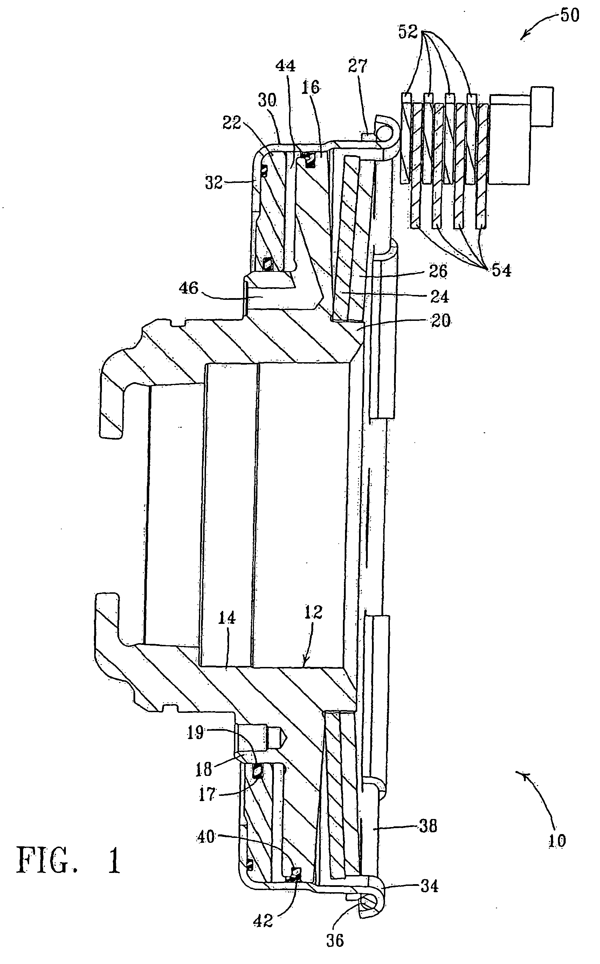

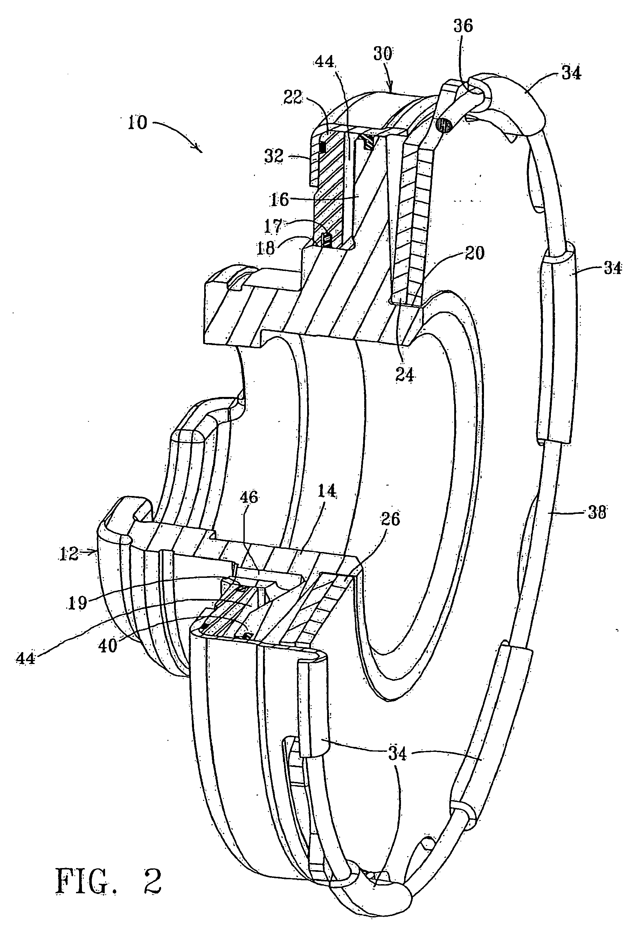

Gemäß den Fig. 1 und 2 umfasst die Aktuatorvorrichtung 10 ein hohles, im Wesentlichen zylindrisch ausgebildetes Trägerteil 12. Das Trägerteil 12 weist eine im Wesentlichen zentral angeordnete, hohle Nabe 14 auf, welche an ein - in den Fig. 1 und 2 nicht gezeigtes - ortsfest angeordnetes Gehäuse beziehungsweise an eine Achse adaptierbar ist. Ein Flansch 16 ragt in radialer Richtung von der Nabe 14 bzw. von dem Trägerteil 12 ab und ist zwischen einem Nabenabschnitt 18, welcher einen größeren Durchmesser aufweist, und einem Nabenabschnitt 20 angeordnet, welcher einen kleineren Durchmesser aufweist. Ein Ringkolben 22 ist verschiebbar bzw. gleitend und dichtend auf dem Nabenabschnitt 18 und benachbart bzw. anstoßend an den Flansch 16 angeordnet. Eine Nut 17 ist in dem Ringkolben 22 ausgebildet und nimmt eine ringförmige Dichtung 19 auf, welche in dichtendem Eingriff mit der äußeren Oberfläche des Nabenabschnitts 18 steht.

Zwei Tellerfedern 24, 26 sind auf dem Nabenabschnitt 20 angebracht. Eine Vielzahl von Fingern 27 ragen von dem äußeren Rand der Tellerfeder 26 nach außen ab. Ein hohler, ringförmiger und im Wesentlichen schalenförmiger außen angeordneter Kolben oder eine mit einer Bremse in Eingriff bringbare Einheit 30 umgibt zumindest bereichsweise den Flansch 16, den Ringkolben 22 und die Tellerfedern 24, 26. Die Einheit 30 umfasst einen ringförmigen Flansch 32, welcher von einem Ende der Einheit 30 in radialer Richtung nach innen abragt und welcher an einem - in radialer Richtung gesehen - äußeren Abschnitt einer äußeren seitlichen Oberfläche des Ringkolbens 22 zur Anlage bringbar ist. Das andere Ende der Einheit 30 bildet eine Vielzahl von Henkeln 34, welche in umfangsmäßiger Richtung voneinander beabstandet angeordnet sind und welche in einer - vorzugsweise umgekehrten - C-Form gekrümmt sind, wie dies beispielsweise Fig. 1 entnehmbar ist. Die Henkel 34 bilden eine Vertiefung 36 bzw. Mulde, welche einen Sprengring 38 aufnehmen. Der Sprengring 38 steht mit den Fingern 27 der Tellerfeder 26 in Eingriff, um hierdurch die Tellerfedern 24, 26 auf dem Nabenabschnitt 20 zu halten. Eine äußere ringförmigen Vertiefung bzw. Nut 40, welche an dem Flansch 16 ausgebildet ist, nimmt eine ringförmige Dichtung 42 auf, welche an einer inneren Oberfläche der Einheit 30 zur Anlage bringbar ist. Der Flansch 16, der Nabenabschnitt 18, der Ringkolben 22 und die Einheit 30 umschließen eine ringförmige Kolbenkammer 44. Ein Flüssigkeitskanal 46 ist in der Nabe 14 ausgebildet, um eine in den Fig. 1 und 2 nicht gezeigte ansteuerbare Flüssigkeitsdruckquelle mit der Kolbenkammer 44 zu kommunizieren.

Fig. 1 ist entnehmbar, dass die Tellerfedern 24, 26 derart vorgespannt bzw. im Querschnitt schräg ausgebildet sind, dass sie die Henkel 34 von dem Flansch 16 weg und in eine Plattenanordnung 50 drücken, welche mit einem in den Fig. 1 und 2 nicht gezeigten Fahrzeugrad wirkverbunden ist. Die Plattenanordnung 50 weist einen Satz von drehfest angeordneten Reibscheiben bzw. Reibplatten 52 und einen Satz von mit einem - in den Fig. 1 und 2 nicht gezeigten - Rad sich drehenden Reibscheiben beziehungsweise Reibplatten 54 auf. Dementsprechend ist die Plattenanordnung 50 normalerweise von der Aktuatorvorrichtung 10 druckbeaufschlagt. Wenn die Kolbenkammer 44 mit Druck beaufschlagt wird, bewegen sich der Ringkolben 22, die Einheit 30 und die Henkel 34 allesamt nach links und weg von der Plattenanordnung 50. Somit kann die Plattenanordnung 50 von der Aktuatorvorrichtung 10 druckentlastet werden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Aktuatorvorrichtung, insbesondere für eine Feststellbremse, mit einem Trägerteil (12), einem Ringkolben (22), einer Tellerfeder (24, 26) und einer hohlen, mit einer Bremse in Eingriff bringbaren Einheit (30), wobei das Trägerteil (12) einen Flansch (16) aufweist, welcher radial von dem Trägerteil (12) abragt, wobei der Ringkolben (22) verschiebbar und dichtend an dem Trägerteil (12) angeordnet ist, wobei die Tellerfeder (24, 26) an dem Trägerteil (12) angeordnet ist, wobei die Einheit (30) den Flansch (16), den Ringkolben (22) und die Tellerfeder (24, 26) zumindest bereichsweise umgibt, wobei der Flansch (16), das Trägerteil (12), der Ringkolben (22) und die Einheit (30) eine Kolbenkammer (44) umschließen, **dadurch gekennzeichnet, dass** der Flansch (16) zwischen dem Ringkolben (22) und der Tellerfeder (24, 26) angeordnet ist, dass ein erstes Ende (32) der Einheit (30) mit dem Ringkolben (22) koppelbar ist, dass ein zweites Ende der Einheit (30) mit der Tellerfeder (24) koppelbar und ausgebildet ist, mit einer Radbremse in Eingriff bringbar zu sein, dass die Tellerfeder (24, 26) derart vorgespannt und/oder im Querschnitt schräg ausgebildet ist, dass das zweite Ende der Einheit (30) von dem Flansch (16) wegbewegt wird, und dass eine unter Druck stehende Flüssigkeit in der Kolbenkammer (44) das zweite Ende der Einheit (30) zu dem Flansch (16) hinbewegt.

2. Aktuatorvorrichtung nach Anspruch 1, **dadurch gekennzeichnet, dass** das Trägerteil (12) eine im Wesentlichen zentriert angeordnete, hohle Nabe (14) aufweist, welche ausgebildet ist, eine Achse aufzunehmen.

3. Aktuatorvorrichtung nach Anspruch 1 oder 2, **dadurch gekennzeichnet, dass** eine Vielzahl von Fingern (27) von einem äußeren Rand der Tellerfeder (26) nach außen abragen, dass das zweite Ende der Einheit (30) eine Vielzahl von in umfangsmäßiger Richtung voneinander beabstandet angeordneten Henkel (34) aufweist, und dass mit den Henkeln (34) ein Sprengring (38) haltbar ist, welcher mit den Fingern (27) zur Anlage bringbar ist.

4. Aktuatorvorrichtung nach Anspruch 3, **dadurch gekennzeichnet, dass** die Henkel (34) eine Vertiefung (36) bilden, welche den Sprengring (38) aufnehmen.

5. Aktuatorvorrichtung nach einem der Ansprüche 1 bis 4, **dadurch gekennzeichnet, dass** eine ringförmige Vertiefung oder eine Nut (40) an einer äußeren Oberfläche des Flansches (16) ausgebildet ist und dass eine ringförmige Dichtung (42) in der Nut (40) angeordnet ist, wobei die ringförmige Dichtung (42) mit einer inneren Oberfläche der Einheit (30) zur Anlage bringbar ist.

6. Aktuatorvorrichtung nach einem der Ansprüche 1 bis 5, **dadurch gekennzeichnet, dass** ein Flüssigkeitskanal (46) in dem Trägerteil (12) ausgebildet ist, um eine unter Druck stehende Flüssigkeit mit der Kolbenkammer (44) zu kommunizieren.

7. Aktuatorvorrichtung nach einem der Ansprüche 1 bis 6, **dadurch gekennzeichnet, dass** eine ringförmige Vertiefung oder eine Nut (17) an einer inneren Oberfläche des Ringkolbens (22) ausgebildet ist und dass eine ringförmige Dichtung (19) in der Nut (17) angeordnet ist, wobei die ringförmige Dichtung (19) mit einer äußeren Oberfläche des Trägerteils (12) zur Anlage bringbar ist.

## Claims

1. An actuator device, especially for a locking brake, with a support part (12), an annular piston (22), a disc spring (24, 26) and a hollow unit (30) which can be brought into engagement with a brake, wherein the support part (12) has a flange (16) which projects radially from the support part (12), wherein the annular piston (22) is arranged slidably on and sealed relative to the support part (12), wherein the disc spring (24, 26) is arranged on the support part (12), wherein the unit (30) at least regionally surrounds the flange (16), the annular piston (22) and the disc spring (24, 26), wherein the flange (16), the support part (12), the annular piston (22) and the unit (30) enclose a piston chamber (44), **characterized in that** the flange (16) is disposed between the annular piston (22) and the disc spring (24, 26), **in that** a first end (32) of the unit (30) can be coupled to the annular piston (22), **in that** a second end of the unit (30) can be coupled to the disc spring (24) and is formed so that it can be brought into engagement with a wheel brake, **in that** the disc spring (24, 26) is so pre-stressed and/or of inclined form in cross-section that the second end of the unit (30) is moved away from the flange (16), and **in that** pressurised fluid in the piston chamber (44) moves the second end of the unit towards the flange (16).

2. An actuator device according to claim 1, **characterized in that** the support part (12) has a substantially centred, hollow hub (14) which is formed to receive an axle.

3. An actuator device according to claim 1 or 2, **characterized in that** a plurality of fingers (27) extend outwards from an outer edge of the disc spring (26), **in that** the second end of the unit (30) has a plurality of lugs (34) spaced from one another in the peripheral direction and **in that** a snap ring (38) can be retained by the lugs and can be brought into abutment with the fmgers (27).

4. An actuator device according to claim 3, **characterized in that** the lugs (34) form recesses which receive the spring ring (38).

5. An actuator device according to any of claims 1 to 4, **characterized in that** an annular recess or a groove (40) is formed in an outer surface of the flange (16) and **in that** an annular seal (42) is disposed in the groove (40), wherein the annular seal (42) can be brought into abutment with an inner surface of the unit (30).

6. An actuator device according to any of claims 1 to 5, **characterized in that** a fluid channel (46) is formed in the support part (12) in order to communicate fluid under pressure to the piston chamber (44).

7. An actuator device according to any of claims 1 to 6, **characterized in that** an annular recess or a groove (17) is formed in an inner surface of the annular piston (22) and **in that** an annular seal (19) is disposed in the groove (17), wherein the annular seal (19) can be brought into abutment with an outer surface of the support part (12).

## Revendications

1. Actionneur, en particulier pour un frein de stationnement, comportant un élément de support (12), un piston annulaire (22), un ressort Belleville (24, 26) et une unité (30) creuse, propre à entrer en prise avec un frein, l'élément de support (12) comportant une bride (16) en saillie radiale sur l'élément de support (12), le piston annulaire (22) étant agencé de manière mobile et étanche sur l'élément de support (12), le ressort Belleville (24, 26) étant agencé sur l'élément de support (12), l'unité (30) entourant au moins en partie la bride (16), le piston annulaire (22) et le ressort Belleville (24, 26), une chambre de piston (44) étant délimitée par la bride (16), l'élément de support (12), le piston annulaire (22) et l'unité (30), **caractérisé en ce que** la bride (16) est agencée entre le piston annulaire (22) et le ressort Belleville (24, 26), **en ce qu'**une première extrémité (32) de l'unité (30) peut être attachée au piston annulaire (22), **en ce qu'**une deuxième extrémité de l'unité (30) peut être attachée au ressort Belleville (24) et est conçue pour pouvoir entrer en prise avec un frein de roue, **en ce que** le ressort Belleville (24, 26) est précontraint et/ou est réalisé avec une section biaise de telle sorte que la deuxième extrémité de l'unité (30) s'écarte de la bride (16), et **en ce qu'**un liquide sous pression dans la chambre de piston (44) déplace la deuxième extrémité de l'unité (30) vers la bride (16).

2. Actionneur selon la revendication 1, **caractérisé en ce que** l'élément de support (12) comporte un moyeu (14) creux, agencé sensiblement au centre et conçu pour recevoir un axe.

3. Actionneur selon la revendication 1 ou 2, **caractérisé en ce qu'**une pluralité de doigts (27) sont en saillie vers l'extérieur sur un bord extérieur du ressort Belleville (26), **en ce que** la deuxième extrémité de l'unité (30) comporte une pluralité d'anses (34) écartées les unes des autres dans le sens périphérique, et **en ce que** les anses (34) permettent de retenir un circlips (38) qui peut être amené en appui contre les doigts (27).

4. Actionneur selon la revendication 3, **caractérisé en ce que** les anses (34) forment des creux (36) destinés à recevoir le circlips (38).

5. Actionneur selon l'une quelconque des revendications 1 à 4, **caractérisé en ce qu'**un creux annulaire ou une rainure (40) est réalisé sur une surface extérieure de la bride (16) et **en ce qu'**une garniture d'étanchéité (42) annulaire est posée dans la rainure (40), la garniture d'étanchéité (42) annulaire pouvant être amenée en appui sur une surface intérieure de l'unité (30).

6. Actionneur selon l'une quelconque des revendications 1 à 5, **caractérisé en ce qu'**un conduit pour liquide (46) est réalisé dans l'élément de support (12) en vue de faire communiquer un liquide sous pression avec la chambre de piston (44).

7. Actionneur selon l'une quelconque des revendications 1 à 6, **caractérisé en ce qu'**un creux annulaire ou une rainure (17) est réalisé sur une surface intérieure du piston annulaire (22) et **en ce qu'**une garniture d'étanchéité (19) annulaire est posée dans la rainure (17), la garniture d'étanchéité (19) annulaire pouvant être amenée en appui sur une surface extérieure de l'élément de support (12).
